# EUROPÄISCHE PATENTSCHRIFT

(11) **EP 2 873 499 B1**
(45) Veröffentlichungstag und Bekanntmachung des Hinweises auf die Patenterteilung: **17.01.2018**
(21) Anmeldenummer: 14189298.4
(22) Anmeldetag: 17.10.2014
(51) Int. Cl.: B29D 30/46, B26D 1/08, B26D 5/32, B26D 7/02, B26D 7/06, B65H 35/06

(54) **Schneidvorrichtung zum Schneiden eines dünnen und klebrigen Bandes, insbesondere eines Cordbandes**
Cutting device for cutting a thin and adhesive belt, in particular a cord belt
Dispositif de coupe pour couper une bande fine et collante, notamment une bande de corde

(30) Priorität: 19.11.2013 DE 102013112742
(43) Veröffentlichungstag der Anmeldung: 20.05.2015
(73) Patentinhaber: Karl Eugen Fischer GmbH, 96224 Burgkunstadt (DE)
(72) Erfinder: Flieger, Walter, 95326 Kulmbach (DE)
(74) Vertreter: Lindner Blaumeier Patent- und Rechtsanwälte

(56) Entgegenhaltungen:
- EP-A1- 1 745 920
- EP-A1- 2 286 987
- WO-A2-2007/027088
- DE-B- 1 260 131
- DE-U1-202013 102 346

## Beschreibung

Die Erfindung betrifft eine Schneidvorrichtung zum Schneiden eines dünnen und klebrigen Bandes, insbesondere eines Cordbandes, umfassend ein Obermesser und ein Untermesser, eine Zugvorrichtung zum Hindurchziehen eines zu schneidenden Bandabschnitts, sowie einen oberseitig auf das Band aufsetzbaren Niederhalter umfassend eine Magnetleiste zum Fixieren des Bandes, welche Magnetleiste entweder direkt mit im Band enthaltenen Metallelementen oder mit einer unterhalb des Bandes angeordneten und das Untermesser übergreifenden, vertikal bewegbaren Klemmleiste derart zusammenwirkt, dass das Band mit seiner vorlaufenden Kante zum Erfassen mit einem Greifabschnitt der Zugvorrichtung anhebbar ist, wobei die Magnetleiste in der das Band niederhaltenden Stellung das Band von oben direkt auf das Untermesser oder die Klemmleiste drückt.

Eine derartige Schneidvorrichtung ist beispielsweise aus DE 10 2009 037 506 A1 bekannt. Sie dient zum Schneiden von in ihrer Länge exakt bemessenen Abschnitten von einem endlosen Band, das von einer Abwickelrolle abgezogen wird. Ein solches Band ist beispielsweise ein Textil- oder Stahlcordband, wie es beispielsweise im Rahmen der Reifenherstellung verarbeitet wird.

Eine aus dem genannten Stand der Technik bekannte Schneideinrichtung umfasst ein Ober- und ein Untermesser, wobei das Obermesser vertikal relativ zum feststehenden Untermesser bewegbar ist. Vorgesehen ist ferner eine Zugvorrichtung umfassend einen Greifabschnitt, mit dem die vorlaufende Kante des Bandes, die sich an der Schneidkante des Untermessers befindet, gegriffen wird, und mit der das Band in der gewünschten Länge des Bandabschnitts durch die aufgefahrenen Messer gezogen wird. Weiterhin ist ein Niederhalter mit einer Magnetleiste vorgesehen, die zum einen zum Fixieren des Bandes während des Schnittes dient, zum anderen dient sie auch dazu, das Band etwas anzuheben, damit der Greifabschnitt die vorlaufende Bandkante unterfahren und erfassen kann, um das Band nachfolgend abzuziehen.

Bei der aus DE 10 2009 037 506 A1 bekannten Schneidvorrichtung ist die Magnetleiste an einem Balken des Niederhalters derart angeordnet, dass sie sich oberhalb des Untermessers befindet, so dass sichergestellt ist, dass die Magnetleiste in der das Band niederhaltend in Stellung das Band von oben direkt auf das Untermesser drückt. Hierüber wird erreicht, dass das Band relativ nah an der eigentlichen Schneidkante während des Schnitts fixiert wird. Diese Ausgestaltung, bei der das Band von der Magnetleiste direkt auf das Obermesser gedrückt wird, kommt zum Einsatz, wenn ein Bandmaterial mit eingebrachten Metallelementen, die mit der Magnetleiste wechselwirken, also von dieser angezogen werden, verarbeitet wird. Denn das Band haftet magnetisch an der Magnetleiste und kann so nach dem Schnitt durch einfaches Hochfahren des Niederhalters und damit der Magnetleiste kantenseitig angehoben werden, so dass der Greiferabschnitt untergreifen kann. Für den Fall, dass ein Band verarbeitet wird, das keine solche Metallpartikel aufweist, ist gemäß DE 10 2009 037 506 A1 eine Klemmleiste aus einem magnetisierbaren, also mit der Magnetleiste magnetisch zusammenwirkenden Material unterhalb des Bandes und das Untermesser zumindest abschnittsweise übergreifend vorgesehen. Die auf das Band abgesenkte Magnetleiste drückt das Band auf diese Klemmleiste während des Schnitts. Um nachfolgend das Band kantenseitig anzuheben, verfährt die Magnetleiste wieder nach oben, das Band ist jedoch zwischen der Magnetleiste und der Klemmleiste, die ihrerseits vertikal beweglich ist und von den nach oben fahrenden Magnetleiste aufgrund der magnetischen Kopplung mitgenommen wird, fixiert und wird angehoben.

Wird bei der aus DE 10 2009 037 506 A1 bekannten Schneidvorrichtung der Niederhalter und mit ihm die Magnetleiste in Richtung des Bandes abgesenkt, so kommt es noch bevor die Magnetleiste auf das Band drückt zu einer magnetischen Wechselwirkung zwischen Magnetleiste und entweder den Metallpartikeln, beispielsweise den Stahlcordfäden, im Band, oder zwischen der Magnetleiste und der unterhalb des Bandes befindlichen Klemmleiste. Es wurde nun beobachtet, dass das Band respektive das Band samt Klemmleiste noch vor dem Aufsetzen der Magnetleiste auf dem Band aufgrund der magnetischen Wechselwirkung bereits etwas angehoben wird. Untersuchungen haben gezeigt, dass es infolge dieser magnetisch bedingten, frühzeitigen Anhebebewegung zu einem leichten Verzug des Bandes insbesondere im Bereich der Schneidkante des Untermessers kommt, auch wenn der Niederhalter in die endgültige Niederhalteposition gefahren ist. Dieser leichte Verzug kann sich nachteilig auf den nachfolgenden Schnitt auswirken, da durch diesen Verzug gegebenenfalls leicht unparallele Materialkanten geschnitten werden, d. h., dass die Maßhaltigkeit der geschnittenen Cordbandstreifen hierüber gegebenenfalls beeinträchtigt werden kann.

Aus WO 2007/027088 A2 ist eine Zuführeinrichtung bekannt, um Bandmaterial einer Schneideinrichtung zuzuführen. Die Zuführeinrichtung umfasst zwei Magnetleisten, die an einer gemeinsamen Trägereinrichtung angeordnet sind. Diese Trägereinrichtung ist linear bewegbar, kann also in Bandförderrichtung bewegt werden. Die Funktion ist derart, dass zum Transport einer zu schneidenden Bandlänge die angehobenen Magnetleisten über den Träger in eine zurückgezogene, von der Schneideinrichtung entfernte Position gebracht werden. In dieser fahren die Magnetleisten ab, das Stahlcordband wird magnetisch fixiert. Anschließend fahren die Magnetleisten wieder hoch, heben das Band also geringfügig an, wonach der Träger in Richtung der Schneideinrichtung verfährt und das Band in Richtung der Schneideinrichtung schiebt, so dass der entsprechende Bandabschnitt durch die Messeranordnung geschoben wird. In der Endposition fahren die Magnetleisten wieder hoch, um das Band wieder freizugeben. Anschließend erfolgt der Schnitt, während gleichzeitig die Magnetleisten über den Träger wieder in die zurückgefahrene Position verfahren, um unmittelbar nach Schnittbeginn den nächsten Bandabschnitt zu fördern.

Der Erfindung liegt damit das Problem zugrunde, eine Schneidvorrichtung anzugeben, die demgegenüber verbessert ist und trotz Verwendung einer Magnetleiste einen präzisen Schnitt ermöglicht.

Zur Lösung dieses Problems ist bei einer Schneidvorrichtung der eingangs genannten Art erfindungsgemäß vorgesehen, dass am Niederhalter eine in Richtung der Zugvorrichtung der Magnetleiste vorgeschaltete Niederhaltleiste vorgesehen ist, relativ zu welcher die Magnetleiste vertikal bewegbar ist, wobei die Niederhalteleiste beim Absenken des Niederhalters auf das Band vorläuft und das Band niederdrückt, wonach erst die Magnetleiste auf das Band bewegt wird, wobei die vertikal zur Bandebene stehende Niederhalteleiste beim Absenken des Niederhalters auf das Band vorläuft und mit ihrer Unterkante das Band niederdrückt, wonach erst die Magnetleiste auf das Band bewegt wird.

Bei der erfindungsgemäßen Schneidvorrichtung ist der Magnetleiste eine Niederhalteleiste vorgeschaltet, die beim Absenken des Niederhalters vorläuft und bereits das Band berührt und auf das Untermesser oder die Klemmleiste drückt, bevor die Magnetleiste dem Band derart nahekommt, dass es zu einer magnetischen Wechselwirkung mit den im Band enthaltenen Metallelementen oder der Klemmleiste kommt. Mittels dieser Niederhalterleiste wird folglich das Band bereits frühzeitig im Bereich der Schneidkante des Untermessers fixiert, ohne dass es zu einer Interaktion der Magnetleiste kommt respektive diese das Band niederhält.

Hieraus resultiert, dass das Band folglich die Position beibehält, in welche es durch die Zugvorrichtung beim Durchziehen gebracht wurde, d. h., dass es zu keinerlei Verzug des Bandes vor dem eigentlichen Schnitt kommt.

Um dieses zeitversetzte Aufsetzen und damit Fixieren des Bandes durch die Niederhalteleiste einerseits und die Magnetleiste andererseits zu realisieren ist die Magnetleiste erfindungsgemäß relativ zu der Niederhalteleiste beweglich. D. h., dass eine erste Klemmung durch die Niederhalteleiste möglich ist, wonach Niederhalteleiste und Magnetleiste nach wie vor relativ zueinander bewegt werden können, so dass die Magnetleiste zeitversetzt auf das Band aufsetzt.

Diese Relativbeweglichkeit kann entweder dadurch realisiert sein, dass die Niederhalteleiste insoweit fest, also unbeweglich am Niederhalter angeordnet ist, während die Magnetleiste über ein oder mehrere entsprechende Stellelemente beweglich am Niederhalter angeordnet ist. Alternativ wäre es denkbar, die Niederhalteleiste, die ja lediglich einen vorlaufenden Klemmzweck erfüllt, beweglich am Niederhalter zu lagern, beispielsweise gegen die Rückstellkraft mehrerer Federelemente, während die Magnetleiste fest und unbeweglich am Niederhalter angeordnet ist. In diesem Fall würde die Niederhalterleiste gegen das Band laufen, der Niederhalter würde anschließend noch weiter abgesenkt, um die Magnetleiste in Anlage auf das Band zu bringen. Hierbei bewegt sich der Niederhalter respektive ein entsprechender Niederhalterbalken, an dem die Klemmleiste angeordnet ist, relativ zur Klemmleiste, die gegen Federelemente arbeitet, die die Niederhalterleiste nach dem Anheben wieder in die Ausgangsstellung zurückdrückt. Anstelle einer solchen Federlagerung oder Ähnlichem ist es selbstverständlich auch denkbar, die Niederhalteleiste über entsprechende Stellelemente wie ein steuerbarer Stellzylinder beweglich anzuordnen und nach dem Aufsetzen den Bewegungsausgleich über diese Stellelemente vorzunehmen.

Da die Niederhalteleiste der Magnetleiste in Richtung der Schneidkante des Untermessers vorgeschaltet ist, besteht mit besonderem Vorteil die Möglichkeit, die Niederhalteleiste sehr nahe an der eigentlichen Schneidkante zu positionieren. D. h., dass diese Bandklemmung folglich fast nahestmöglich zur eigentlichen Schneidkante gegeben, was sich auf den nachfolgenden Schnitt positiv auswirkt.

Zweckmäßig ist es weiterhin, wenn auch an der anderen Seite der Magnetleiste eine zweite Niederhalteleiste vorgesehen ist, die ebenfalls vorläuft und gemeinsam mit der ersten Niederhalteleiste am Band angreift. Wird die Magnetleiste abgesenkt, so wird durch Verwendung dieser zweiten Niederhalteleiste das Band auf der anderen Magnetleistenseite ebenfalls fixiert. Die Wechselwirkung zwischen Magnetleiste und Metallelementen bzw. Cordfäden respektive Klemmleiste hat nunmehr auch auf dieser Seite keinerlei Auswirkungen auf das Band, da es auch dortseits fixiert ist. Es kann also auch an dieser Seite nicht zu einem etwaigen Verzug oder Ähnlichem aufgrund der magnetischen Wechselwirkung kommen.

Der einen oder den beiden Niederhalterleisten kommt wie ausgeführt eine Klemmfunktion zu, mit der das Band leicht geklemmt wird, um es gegen Verzug zu sichern. Hierzu kann die Niederhalteleiste und gegebenenfalls auch die zweite Niederhalteleiste über die gesamte Bandbreite aufliegen, so dass das Band gleichmäßig belastet wird. Denkbar ist es aber auch, dass die jeweilige Niederhalteleiste nur abschnittsweise am Band aufliegt, mithin also die Niederhalteleiste durch mehrere einzelne und voneinander beabstandete Leistenabschnitte gebildet ist.

Der Niederhalter ist wie beschrieben über eine Antriebseinrichtung umfassend ein Antriebselement vertikal aus der Ruhestellung in eine Arbeitsstellung, in der die Niederhalteleiste, gegebenenfalls beide Niederhalteleisten, am Band aufliegen, bewegbar. Die Antriebseinrichtung ist so ausgelegt, dass der Niederhalter, der über geeignete Linearführungen an einem Vorrichtungsgestell gelagert ist, die entsprechende Vertikalbewegung exakt vornehmen kann, wozu unterschiedliche Ausführungen der Antriebseinrichtung denkbar sind.

Anhand einer ersten Erfindungsalternative kann die Antriebseinrichtung einen Riementrieb umfassen, mit wenigstens einem Riemen, der über Rollen läuft, sowie mit wenigstens einem Antriebselement zum Antreiben einer Rolle, wobei der über Linearführungen vertikal bewegbar gelagerte Niederhalter mit dem Riemen gekoppelt ist. Gemäß dieser Erfindungsausgestaltung ist ein umlaufender Riemen mit einem daran befestigten Koppelelement, an dem der Niederhalter angebunden ist, vorgesehen. Der Riemen läuft über eine obere und eine untere Rolle, von denen eine angetrieben ist. Je nach Drehrichtung wird zwangsläufig der riemenseitig angebundene Niederhalter in seinen Linearführungen vertikal auf- oder abwärtsbewegt. Der Antrieb einer Rolle über ein entsprechendes motorisches Antriebselement ist hierbei ausreichend. Alternativ zur Verwendung eines Riementriebs ist selbstverständlich auch ein Kettentrieb verwendbar, in diesem Fall wäre zwangsläufig der Niederhalter mit der Kette gekoppelt.

Wenngleich ein einseitig angeordneter Riemen- oder Kettentrieb ausreichend ist, den linear geführten Niederhalter exakt zu bewegen, ist nach einer Weiterbildung der Erfindung ein zweiter Riemen- oder Kettentrieb vorgesehen, der an der anderen Seite des Niederhalters angeordnet ist. Die jeweiligen Rollen der beiden Riemen- oder Kettentriebe liegen auf gleicher Höhenposition, was es ermöglicht, zwei Rollen der Riementriebe über eine Welle, insbesondere eine Torsionswelle miteinander zu verbinden, wobei nur eine der verbundenen Rollen über das motorische Antriebselement antreibbar ist. Die Welle ermöglicht eine hinreichend starre Rollenkopplung, so dass ein in die eine Rolle über das motorische Antriebselement eingeleitetes Drehmoment nahezu verlustfrei auf die Rolle des anderen Riementriebs übertragen wird. Hierüber ist also eine beidseitige aktive Niederhalterbewegung möglich.

Alternativ zur Verwendung eines oder zweier Riemen- oder Kettentriebe ist es denkbar, eine Antriebseinrichtung zu verwenden, die wenigstens einen Gewindespindeltrieb umfasst, mit einer über ein motorisches Antriebselement antreibbaren Gewindespindel und einer auf dieser vertikal laufenden Mutter, wobei der über Linearführungen vertikal bewegbar gelagerten Niederhalter mit der Mutter gekoppelt ist. Der entsprechende Antriebsmotor dreht hier die positionsfeste Gewindespindel. Je nach Drehrichtung bewegt sich eine über Wälzkörper, beispielsweise Kugeln gelagerte Mutter vertikal auf- oder abwärts. Mit dieser Mutter ist der Niederhalter gekoppelt, so dass jede Mutterbewegung zwangsläufig in einer Vertikalbewegung der Niederhalters resultiert. Auch bei dieser Erfindungsausgestaltung können zwei Gewindespindeltriebe vorgesehen sein, die beidseits des Niederhalters angeordnet sind, wobei jede Gewindespindel über ein separates motorisches Antriebselement antreibbar ist. Beide Antriebselemente sind selbstverständlich synchronisiert, so dass ein synchroner Gleichlauf der beiden Spindeltriebe sichergestellt ist.

Alternativ zu den beschriebenen Ausgestaltungen der Antriebseinrichtung ist es denkbar, als Antriebseinrichtung entsprechende Stellzylinder, die hydraulisch oder pneumatisch arbeiten, zu verwenden, oder mechanische Kniegelenke und Ähnliches.

Als motorisches Antriebselement wird gemäß einer zweckmäßigen Erfindungsausgestaltung ein Servomotor verwendet, der eine äußerst exakte Niederhalterbewegung zulässt.

Insbesondere in dem Fall, dass eine oder zwei Niederhalteleisten, die unbeweglich am Niederhalter oder einem entsprechenden Niederhalterbalken angeordnet sind, vorgesehen sind, ist es zweckmäßig, wenn ein Erfassungsmittel zum Erfassen der Auflage der Niederhalteleiste, gegebenenfalls der beiden Niederhalteleisten auf dem Band vorgesehen ist. Zwar kann über die Antriebseinrichtung die Endposition, die der Niederhalter und damit auch die eine oder die beiden Niederhalteleisten einnehmen, sehr genau eingestellt werden, so dass folglich die Vertikalbewegung der Niederhalteleisten exakt in dem Moment beendet werden kann, in dem sie an einem in seiner Dicke bekannten Band aufsetzen. Da jedoch nicht immer gewährleistet ist, dass das einlaufende Band stets die gleiche Dicke besitzt, oder um auf einfache Weise die Verarbeitung dickeren oder dünneren Bandmaterials zu ermöglichen, ohne die Antriebseinrichtung entsprechend zu programmieren, ist es zweckmäßig, wenn die Positionierung der Niederhalteleiste(n) über ein entsprechendes Erfassungsmittel überwacht wird. Denn dann kann letztlich unabhängig von der Ist-Banddicke der Moment erfasst werden, in dem die Niederhalteleiste oder beide Niederhalteleisten auf dem Band aufliegen und dieses fixieren. Wird dieser Moment erfasst, so wird die Antriebseinrichtung entsprechend gestoppt, so dass nachfolgend die Magnetleiste abgesenkt werden kann. Das Band wird folglich nicht durch ein zu starkes Aufdrücken der Niederhalteleiste(n) deformiert.

Als ein solches Erfassungsmittel kann besonders zweckmäßig der oder jeder Servomotor dienen, wobei die Position der Niederhalteleiste(n) aus der Stromaufnahme des oder der Servomotoren abgeleitet wird. Die Stromaufnahme des oder der Servomotoren während der kontaktfreien Abwärtsbewegung des Niederhalters ist nach dem Anfahren konstant. Sobald jedoch die eine oder beiden Niederhalteleisten auf dem Band aufliegen, folglich eine Art Überlastfall gegeben ist, nimmt die Stromaufnahme des Servomotors zu. Die ansteigende Stromflanke wird nun als Trigger verwendet, dem Betrieb der Antriebseinrichtung respektive des Antriebselements, hier also des Servomotors selbst unmittelbar zu stoppen. Hierüber ist es folglich möglich, unterschiedlich dicke Bandmaterialien ohne weiteres verarbeiten zu können.

Alternativ zur Ableitung der Leistenposition aus der Stromaufnahme des oder der Servomotoren kann am Niederhalter, vorzugsweise an der Niederhalteleiste, wenigstens ein Sensor vorgesehen sein, mit dem die Auflage der jeweiligen Leiste am Band erfassbar ist. Ein solcher Sensor kann auch dann verwendet werden, wenn ein Servomotor vorgesehen ist. Verwendet werden kann beispielsweise ein Tastsensor, der so angeordnet ist, dass er ein Sensorsignal in dem Moment gibt, in dem die Niederhalteleiste am Band angreift. Gestützt auf dieses Signal wird sodann die weitere Niederhaltebewegung gestoppt und lediglich noch die Magnetleiste über die zugehörigen Stellelemente heruntergefahren.

Die Zugvorrichtung umfasst einen Greifabschnitt, üblicherweise nach Art einer Zange mit einem feststehenden unteren und einem beweglichen oberen Zangenschenkel. Der Greifabschnitt fährt geöffnet über die Bandkante, so dass der untere Zangenabschnitt die Kante unter- und der obere Zangenabschnitt die Kanten übergreift. Zum Greifen der Kante schließt sich nun der Greifabschnitt, d. h., dass der obere bewegliche Zangenabschnitt nach unten bewegt wird. Dieser Greifvorgang erfolgt derart, dass der Greifabschnitt das Band von der Magnetleiste "abschlägt" oder "herunterreißt", mithin also die Magnetkopplung zwischen Magnetleiste und Band respektive Magnetleiste und Klemmleiste löst. Dies kann zu einer weiteren Ungenauigkeit im Zeitpunkt des Greifens führen. Um dem entgegenzuwirken sieht eine zweckmäßige Weiterbildung der Erfindung vor, dass die Antriebseinrichtung derart ausgebildet ist, dass der Niederhalter nach erfolgtem Anheben zum Anheben der Kante und Heranfahren des Greifabschnitts der Zugvorrichtung wieder absenkbar ist, um die Kante auf einen Klemmarm des Greifabschnitts aufzulegen. D. h., dass erfindungsgemäß nach dem Schnitt der Niederhalter etwas angehoben wird, um die geschnittene Kante vom Untermesser anzuheben, so dass der Greifabschnitt heranfahren und die Kante aufnehmen kann. Anschließend wird der Niederhalter und mit ihm die geschnittene Kante wieder etwas abgesenkt, so dass die Bandkante auf den unteren Klemmarm, also den unteren Zangenabschnitt des Greifers gelegt wird. Anschließend fährt der Greifabschnitt zu, d. h., der obere Klemmarm wird nach unten bewegt und die Kante zwischen beiden Klemmarmen geklemmt. Zwar ist nach wie vor noch die Magnetkopplung gegeben, jedoch ist nun die Kante sicher im Greifabschnitt geklemmt, so dass die Magnetleiste ohne Weiteres wieder nach oben bewegt und die Magnetkopplung aufgelöst werden kann.

Die Magnetleiste selbst besteht zweckmäßigerweise aus mehreren nebeneinander angeordneten Blockmagneten, so dass sich eine durchgehende Magneteinheit ergibt. Dies ermöglicht eine schmale Bauform mit gleichzeitig sehr guter Haltekraft. Die Blockmagnete selbst sind bevorzugt in einem Gehäuse, insbesondere einer Blechummantelung aufgenommen, was einen Schutz der Magnete bietet, und eine einfache Anbindung an das oder die Stellelemente, über die die Magnetleiste beispielsweise beweglich an einem Niederhalterbalken angeordnet ist, ermöglicht. Als solche Stellelemente können bevorzugt Stellzylinder, hydraulisch oder pneumatisch angesteuert, verwendet werden, die der beweglichen Anordnung an einem Niederhalterbalken dienen.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Seitenansicht einer erfindungsgemäßen Schneidvorrichtung,
- Fig. 2: eine Frontansicht der erfindungsgemäßen Schneidvorrichtung aus Fig. 1,
- Fig. 3 - 15: verschiedene Detailansichten zur Erläuterung des Ablaufs eines Schneidvorgangs,
- Fig. 16 - 18: drei Detaildarstellungen unterschiedlicher Arbeitspositionen einer erfindungsgemäßen Schneidvorrichtung mit einer Klemmleiste,
- Fig. 19: eine Prinzipdarstellung einer Karkassenanlage umfassend eine erfindungsgemäße Schneidvorrichtung zum Schneiden von Bandmaterial,
- Fig. 20: eine Prinzipdarstellung einer Karkassenanlage mit zusätzlichen Slitter,
- Fig. 21: eine Prinzipdarstellung einer Gürtelanlage umfassend eine erfindungsgemäße Schneidvorrichtung zum Schneiden von Bandmaterial, und
- Fig. 22: eine Prinzipdarstellung einer Gürtelanlage mit zusätzlichem Slitter.

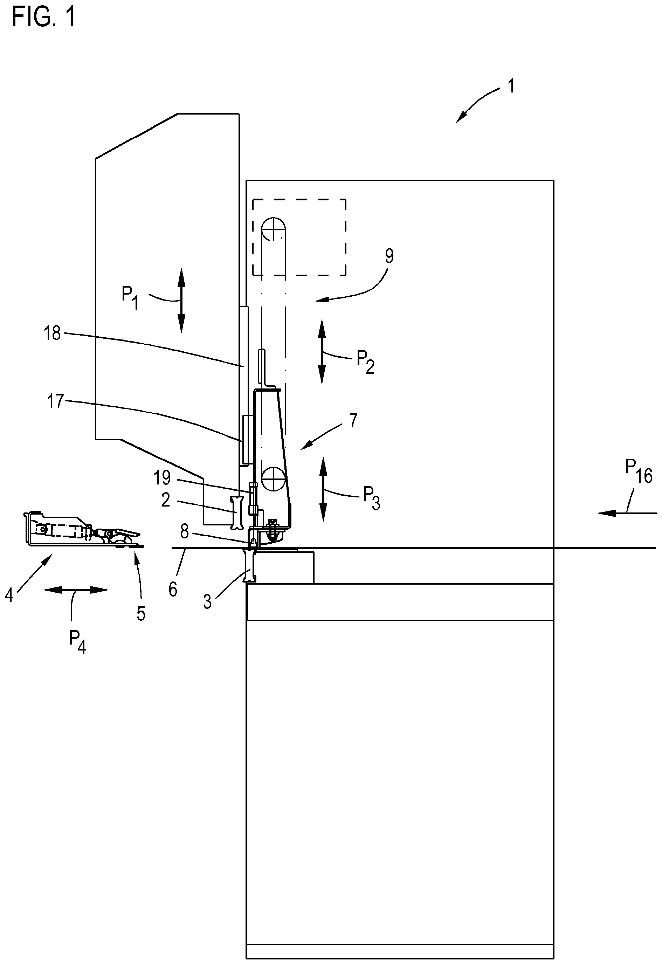

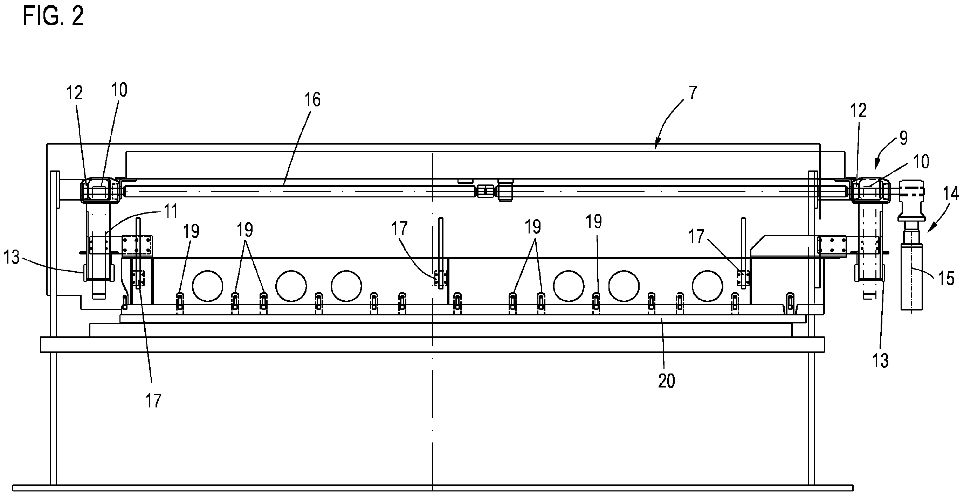

Die Fig. 1 und 2 zeigen Prinzipdarstellungen einer erfindungsgemäßen Schneidvorrichtung 1, die zum Schneiden eines dünnen, klebrigen Bandes wie eines Cordbandes für die Reifenherstellung dient. Die Schneidvorrichtung 1 umfasst ein wie durch den Doppelpfeil P₁ dargestelltes vertikal bewegliches Obermesser 2 und ein positionsfestes Untermesser 3. Vorgesehen ist ferner eine Zugvorrichtung 4 umfassend einen Greifabschnitt 5 zum Hindurchziehen eines zu schneidenden Bandabschnitts des Bandes 6 durch die Schneidvorrichtung respektive die beiden Messer 2, 3.

Vorgesehen ist ferner ein Niederhalter 7 umfassend eine Magnetleiste 8 zum Fixieren des Bandes. Der Niederhalter 7 ist wie durch den Doppelpfeil P₂ dargestellt vertikal bewegbar, wozu eine Antriebseinrichtung 9 vorgesehen ist. Diese Antriebseinrichtung 9 umfasst im gezeigten Beispiel zwei Riementriebe 10, die beidseits des Niederhalters 7 angeordnet sind. Die Riementriebe 10 umfassen jeweils einen Riemen 11, mit dem der Niederhalter 7 verbunden ist. Beide Riemen 11 laufen über zwei Rollen 12, 13. Eine Rolle ist mit einem motorischen Antriebselements 14, hier einem Servormotor 15 gekoppelt, wird also über diesen angetrieben. Die beiden Rollen 12 sind über eine Welle 16, vorzugsweise eine Torsionswelle, miteinander verbunden. Dies führt dazu, dass eine Rotation der angetriebenen Rolle 12 über den Servormotor 15 zwangsläufig auch zu einem über die Welle 16 erwirkten Antrieb der zweiten Rolle 12 führt. Beide Riementriebe 10 werden folglich simultan angetrieben.

Der Niederhalter 7 selbst ist über mehrere Linearführungen 17 an einem Vorrichtungsgestell 18 respektive einem Messerbalken vertikal beweglich angeordnet. In diesen Linearführungen 17 läuft der Niederhalter 7, wenn er über die Antriebseinrichtung 9, also die beiden Riementriebe 10 vertikal bewegt wird.

Die Magnetleiste 8 ihrerseits ist über eine Reihe von Stellelementen, hier Stellzylinder 19 vertikal beweglich am Niederhalter 7 angeordnet, d. h., dass die Magnetleiste 8 relativ zum Niederhalter vertikal verschoben werden kann, wie durch den Doppelpfeil P₃ dargestellt ist.

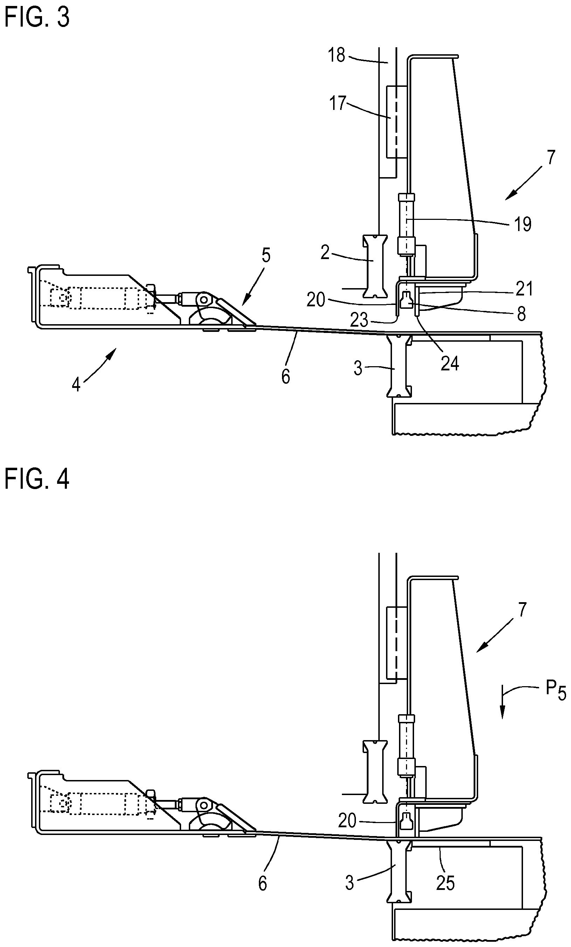

Der nähere Aufbau des Niederhalters 7, der erfindungswesentlich ist, ist unter anderem Fig. 3 zu entnehmen. In dieser Detailansicht ist, neben dem Obermesser 2 und dem Untermesser 3, der Niederhalter 7 in einer Seitenansicht gezeigt. Wie beschrieben ist er über die Linearführungen 17 am Vorrichtungsgestell 18 oder einem Messerbalken vertikal beweglich angeordnet, die Antriebseinrichtung 9 ist hier der Übersichtlichkeit halber nicht näher gezeigt.

Dargestellt ist die Magnetleiste 8, die bevorzugt aus mehreren nebeneinander angeordneten Blockmagneten besteht, worauf nachfolgend noch eingegangen wird. Wie beschrieben ist die Magnetleiste 8 über die Stellzylinder 19 vertikal beweglich. Ersichtlich befindet sie sich vertikal gesehen oberhalb des Untermessers 3, so dass die Magnetleiste 8, wenn sie, wie nachfolgend noch beschrieben wird, heruntergefahren wird, das Band 6 von oben auf das Untermesser 3 drückt.

In Förderrichtung des Bandes (siehe Pfeil P₁₆ in Fig. 1) der Magnetleiste 8 vorgeschaltet ist eine erste Niederhalteleiste 20, die sich - siehe Fig. 2 - nahezu über die gesamte Breite des Niederhalters, in jedem Fall aber über die gesamte Breite der Magnetleiste 8 erstreckt. Eine zweite Niederhalteleiste 21 ist an der anderen Seite der Magnetleiste 8 angeordnet. Die unteren Kanten 23, 24 der Klemmleisten 20, 21 liegen auf gleichem Niveau. Beide Niederhalteleisten 20 und 21 respektive ihre Unterkante 23, 24 sind in der Ausgangsstellung, wie sie in Fig. 3 gezeigt ist, wenn also die Magnetleiste 8 nach oben gefahren ist, vorlaufend zur Magnetleiste 8 angeordnet, sie liegen also vertikal gesehen unterhalb der Magnetleiste 8. Ersichtlich befindet sich die erste Niederhalteleiste 20 ebenfalls oberhalb des Untermessers 3, in unmittelbarer Nachbarschaft zur eigentlichen Schneidkante 22 des Untermessers 3.

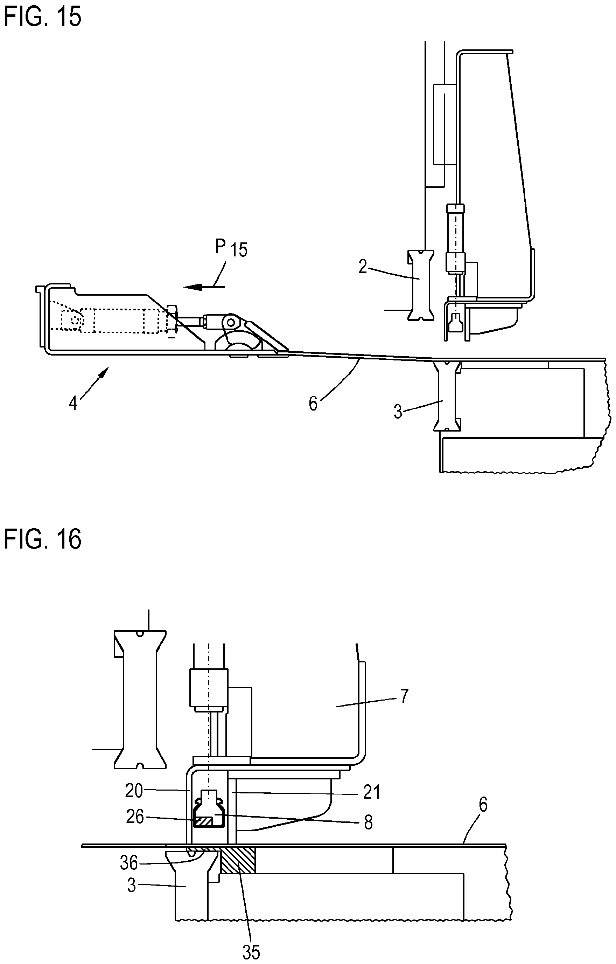

Beginnend mit Fig. 3 wird nun fortlaufend bis zur Fig. 15 in mehreren Detailansichten ein Schneidvorgang beschrieben.

Fig. 3 zeigt die Situation, in welcher die Zugvorrichtung 4 das Band 6 durch die beiden Messer 2, 3 hindurchgezogen hat. Das Band 6 ist nach wie vor im Greifabschnitt 5 gegriffen und fixiert. Ersichtlich befindet sich das Obermesser 2 in der nach oben gefahrenen Ruhestellung, auch der Niederhalter 7 ist nach oben gefahren. Nachfolgend wird nun der Schnitt eingeleitet.

Hierzu wird der Niederhalter 7 über die Antriebseinrichtung 9, hier also die beiden Riementriebe 10 vertikal nach unten gefahren, wie in Fig. 4 durch den Pfeil P₅ angedeutet. Diese Abwärtsbewegung geschieht solange, bis die beiden Niederhalteleisten 20, 21 mit ihren Unterkanten 23, 24 auf dem Band 6 aufliegen, mithin also dieses im Falle der Niederhalteleiste 20 gegen das Untermesser 3 und im Falle der Niederhalteleiste 21 gegen eine dem Untermesser 3 vorgeschaltete Klemmplatte 25 drücken. Das Band 6 ist hierüber fixiert, es kann sich also nicht vom Untermesser 3 respektive der Klemmplatte 25 lösen.

Die Abwärtsbewegung gemäß Pfeil P₅ erfolgt solange, bis die beiden Klemmleisten 20, 21 auf dem Band 6 aufsetzen. Dieser Klemmzeitpunkt wird über die Stromaufnahme des Servomotors 15 erfasst. Denn mit dem Aufsetzen und dem daraus resultierenden Widerstand erhöht sich zwangsläufig mit einer sehr steilen Flanke die Stromaufnahme des Servomotors 15, was als Trigger dient, um den Servomotor 15 und damit die Antriebseinrichtung 9 sofort zu stoppen. Der Niederhalter 7 wird folglich ausgehend von der Stellung gemäß Fig. 4 nicht weiter vertikal abwärtsbewegt.

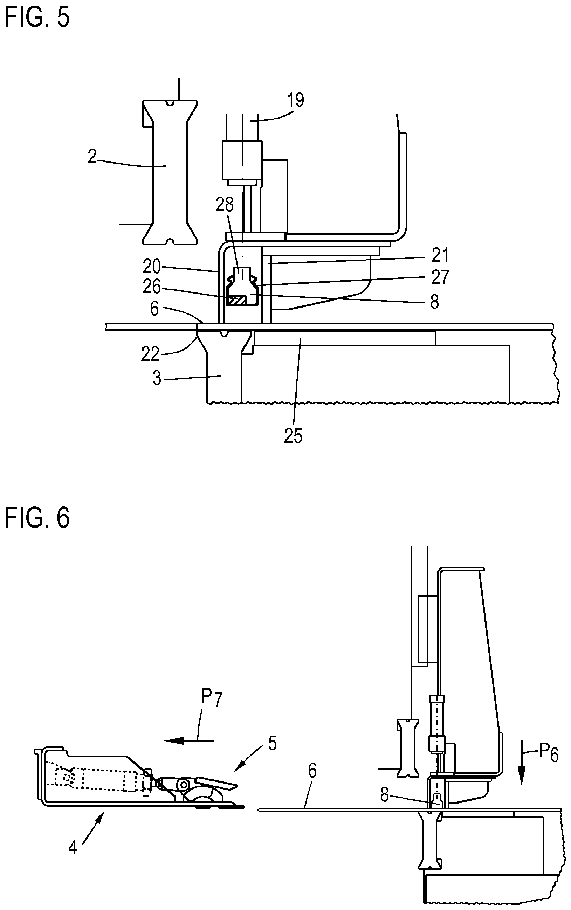

Fig. 5 zeigt die Situation gemäß Fig. 4 in vergrößerter Detailansicht, wobei hier lediglich der Messerbereich gezeigt ist. Ersichtlich drücken die Klemmleisten 20, 21 mit ihren Unterkanten 23, 24 auf das Band 6 und fixieren dieses gegen das Untermesser 3 respektive die Klemmplatte 25. Die Niederhalteleiste 20 fixiert das Band 6 sehr nahe an der Schneidkante 22 des Untermessers 3. Die Magnetleiste 8 ist noch in einer angehobenen Position, in welcher sie noch nicht mit den bei dieser Ausgestaltung im Band 6 befindlichen Metallelementen wie beispielsweise Stahlcordfäden interagiert. In Fig. 5 ist des Weiteren grob der Aufbau der Magnetleiste 8 ersichtlich. Dieser besteht aus einer Vielzahl einzelner, nebeneinander angeordneter Blockmagnete 26, die in einem Gehäuse, hier einer Blechummantelung 27 aufgenommen sind. Die Blockmagnete 26 sind an einem Magnethalter 28, der leistenförmig ist, fixiert, der seinerseits mit den Stellzylindern 19 verbunden ist.

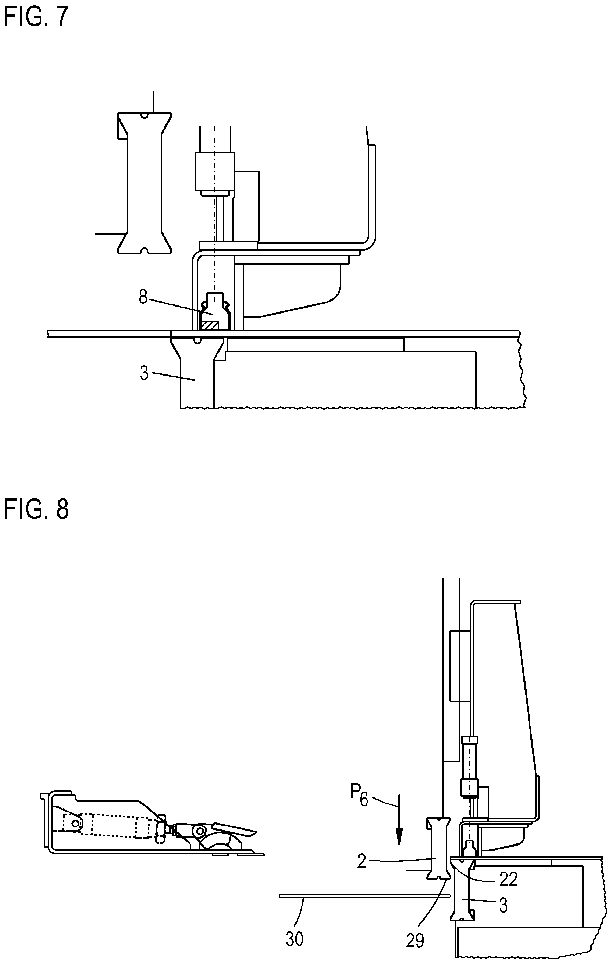

Im nächsten Schritt, siehe Fig. 6, wird nun, wie durch den Pfeil P₆ dargestellt ist, die Magnetleiste 8 abgesenkt, so dass sie auf das Band 6 drückt und dieses, siehe Fig. 7, gegen das Untermesser 3 drückt. Fig. 7 zeigt wiederum die vergrößerte Detailansicht entsprechend Fig. 5. Während der Absenkbewegung der Magnetleiste 8 ruht das Band völlig verzugsfrei im Bereich des Untermessers 3 bzw. der Klemmplatte 25, da es über die beiden Niederhalteleisten 20, 21 sicher fixiert ist.

Nun kann der Schnitt erfolgen, siehe Fig. 8, indem das Obermesser 3 nach unten gefahren wird und mit seiner Schneidkante 29 an der Schneidkante 22 des Untermessers 3 entlangläuft, wobei das Band geschnitten wird und sich ein Bandabschnitt 30 bildet. Die Obermesserbewegung ist durch den Pfeil P₆ dargestellt. Der Bandabschnitt 30 liegt nun frei, nachdem die Zugvorrichtung 4 das Band 6, siehe Fig. 6, bereits freigegeben hat. Hierzu wurde nach Herabfahren der Magnetleiste 8 der Greifabschnitt 5 geöffnet und die Zugvorrichtung gemäß Pfeil P₇ zur Seite gefahren. Der geschnittene Bandabschnitt 30 wird nun über eine nicht näher gezeigte Transporteinrichtung abtransportiert.

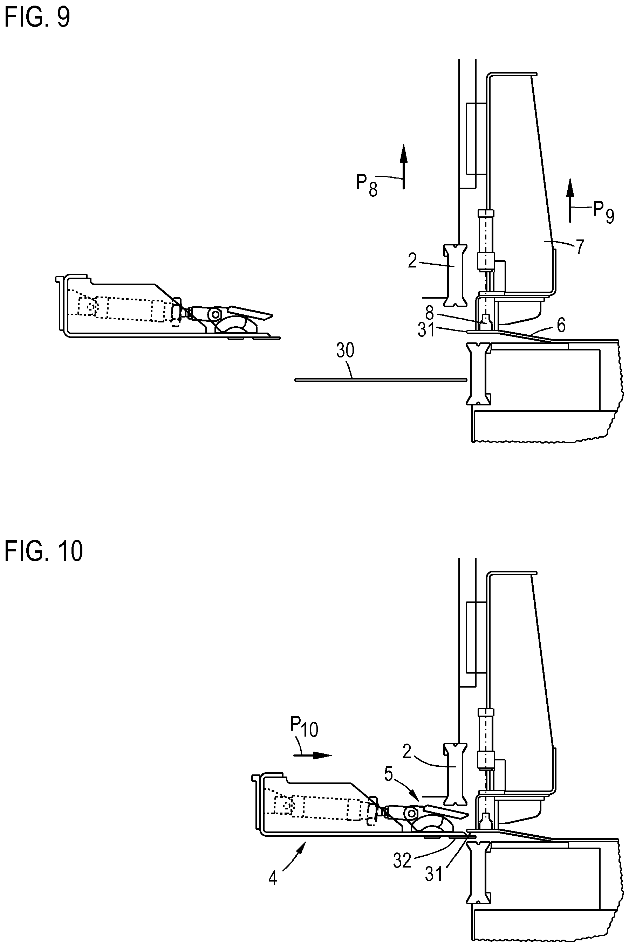

Im nächsten Schritt gemäß Fig. 9 wird nun das Obermesser 2 wieder nach oben bewegt, wie durch den Pfeil P₈ dargestellt ist. Gleichzeitig wird auch der Niederhalter 7 ein kurzes Stück vertikal nach oben bewegt, wie durch den Pfeil Pg dargestellt ist. Hierbei kommt es zu einem Anheben der Kante 31 des Bandes 6. Das Band 6 ist aufgrund der Interaktion der Magnetleiste 8 mit den im Band 6 befindlichen Metallelementen, also den Stahlcordfäden, magnetisch an der Magnetleiste 8 fixiert. Folglich wird es beim vertikalen Anheben des Niederhalters 7 zwangsläufig mitgenommen und nach oben bewegt.

Im nächsten Schritt gemäß Fig. 10 fährt nun die Zugvorrichtung 4 mit geöffnetem Greifabschnitt 5, wie durch den Pfeil P₁₀ dargestellt ist, unter das Obermesser 2 und nimmt die Bandkante 31 auf. Wie Fig. 10 zeigt, ist die Bandkante 31 in diesem Moment noch von dem unteren Klemmarm 32 des Greifabschnitts 5 beabstandet.

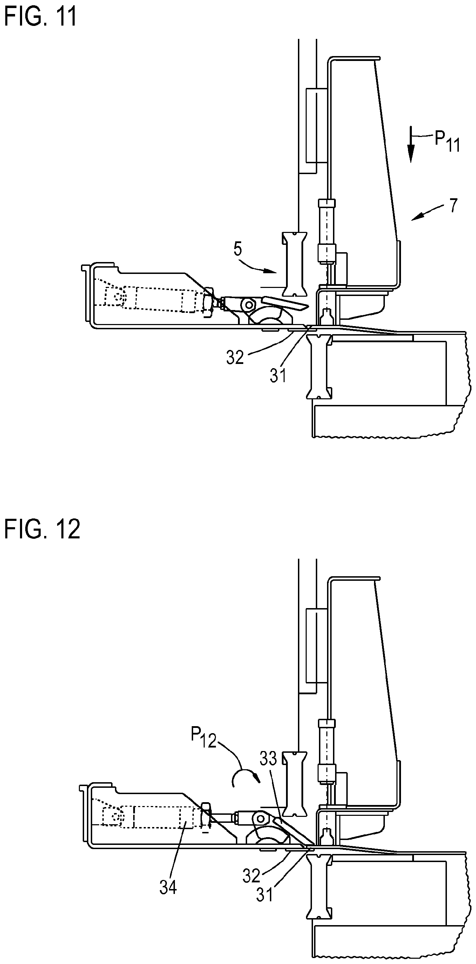

Im nächsten Schritt gemäß Fig. 11 wird nun der Niederhalter 7 über die Antriebseinrichtung 9 erneut ein kurzes Stück vertikal nach unten gefahren, wie durch den Pfeil P₁₁ dargestellt ist. Dies führt dazu, dass die Bandkante 31 auf den Klemmarm 32 des Greifabschnitts 5 gelegt wird. Diese Abwärtsbewegung kann über einen nicht näher gezeigten Sensor, der den Auflagezeitpunkt erfasst, gesteuert werden, oder fest eingestellt sein, nachdem die Niederhalterposition und die Greifabschnittsposition respektive die Position des Klemmarms 32 genau bekannt sind.

Im nächsten Schritt wird, wie siehe Fig. 12, der obere Klemmarm 33, wie durch den Pfeil P12 dargestellt ist, über das entsprechende Stellmittel 34 nach unten bewegt und in die Klemmstellung gebracht, so dass die Bandkante 31 zwischen den beiden Klemmarmen 32, 33 klemmend fixiert ist.

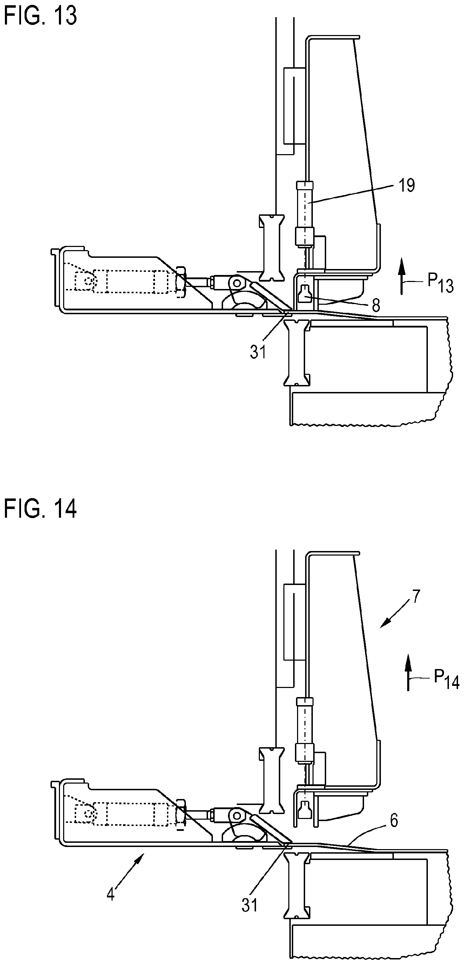

Im folgenden Schritt, siehe Fig. 13, wird nun die Magnetleiste 8 über die Stellzylinder 19 in ihre Ruheposition vertikal nach oben bewegt, wie durch den Pfeil P₁₃ gezeigt ist. Da das Band 6 mit seiner Kante 31 zwischen den Klemmarmen 32, 33 fixiert ist, und da das Band auch in Bezug auf die Vertikalbewegung der Magnetleiste 8, die nach oben erfolgt, über die beiden Niederhalteleisten 20, 21 abgestützt ist, kommt es selbst während dieser Lösebewegung, im Rahmen welcher die Magnetkopplung zwischen Magnetleiste 8 und den Magnetelementen des Bandes 6 gezwungenermaßen aufgehoben wird, nicht zu einem Verzug des Bandes.

Sodann verfährt, siehe in Fig. 14 den Pfeil P₁₄, der Niederhalter 7 nach oben, die Niederhalteleisten 20, 21 werden aus ihrer Anlage am Band 6 gelöst und das Band 6 vollständig freigegeben. Es ist lediglich noch mit seiner Kante 31 in der Zugvorrichtung 4 fixiert.

Nun verfährt die Zugvorrichtung 4, siehe Fig. 15, wieder nach links, vgl. Pfeil P₁₅, wobei das Band 6 wiederum durch die beiden Messer 2, 3 gezogen wird. Anschließend beginnt der Zyklus beginnend mit Fig. 3 von vorne, der nächste Schnitt kann erfolgen.

Das vorstehend beschriebene Beispiel zeigt eine Schneidvorrichtung, die das Schneiden von Bändern mit bandseitig integrierten Metallelementen wie beispielsweise Stahlcordfäden ermöglicht. Denn es kommt zu einer unmittelbaren Interaktion der Magnetleiste 8 mit den im Band eingebetteten Metallelementen, die ein Anheben des Bandes im Kantenbereich ermöglichen. Die Fig. 16 - 18 zeigen eine zweite Ausführungsform einer erfindungsgemäßen Schneidvorrichtung, die insoweit identisch mit der zuvor beschriebenen ist, außer, dass dem Untermesser 3 vorgeschaltet eine Klemmleiste 35 zugeordnet ist, die mit einem Leistenabschnitt 36 das Untermesser 3 übergreift. Die Klemmleiste 35 ist aus einem magnetisierbaren Material, so dass sie von der Magnetleiste 8 respektive den dort befindlichen Blockmagneten 26 angezogen wird.

Fig. 16 zeigt eine Darstellung entsprechend Fig. 5. Auch hier wurde der Niederhalter 7 heruntergefahren, wobei die Bewegung unmittelbar gestoppt wurde, nachdem die beiden Niederhalteleisten 20, 21 auf dem Band 6 aufliegen. Dieser Moment kann wiederum durch die Stromaufnahme des Servomotors 15 erfasst werden. Alternativ wäre - wie auch bei der zuvor beschriebenen Ausführungsform - ein entsprechender Positions- oder Tastsensor vorzusehen, der den Moment des Aufliegens sensiert.

Das Band 6 ist bei dieser Ausführungsform nicht mit Metallelementen versehen, kann also mit der Magnetleiste 8 nicht interagieren. Zu diesem Zweck ist die Klemmleiste 35 vorgesehen. Da jedoch die Magnetleiste 8 in dieser Situation noch entfernt zur Klemmleiste 35 ist, kommt es noch zu keiner magnetischen Interaktion. Die Fixierung des Bandes ist jedoch über die beiden Niederhalteleisten 20, 21 gegeben.

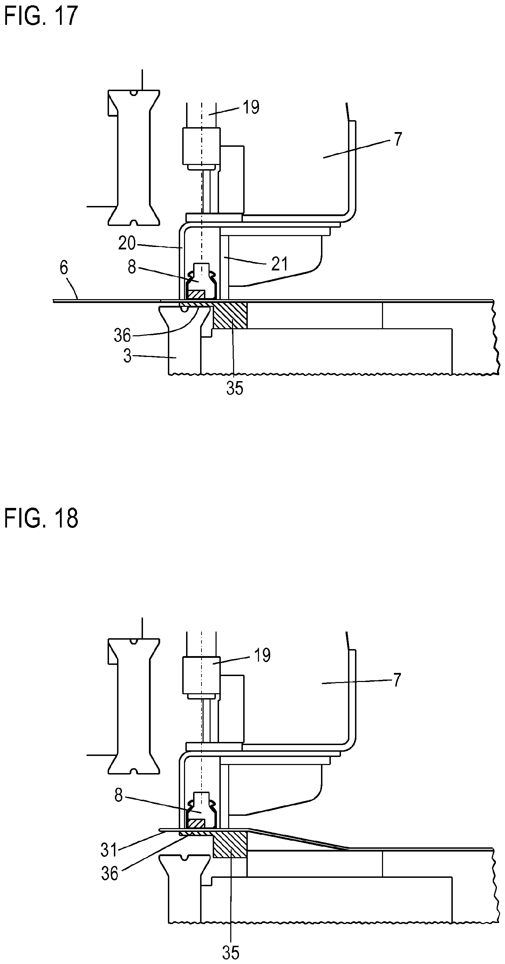

In der nächsten Fig. 17 ist, entsprechend der Darstellung gemäß Fig. 7, die Magnetleiste 8 abgesenkt, sie drückt das Band 6 auf den Leistenabschnitt 36 der Klemmleiste 35, der das Untermesser 3 übergreift. Auch die Niederhalteleiste 20 drückt auf diesen Leistenabschnitt 36. Nunmehr ist eine Magnetkopplung zwischen Magnetleiste 8 und der Klemmleiste 35 gegeben. Diese ermöglicht es nun, siehe Fig. 18, dass beim Anheben des Niederhalters 7 die vertikal beweglich gelagerte Klemmleiste 35 mit angehoben wird. Das Band ist sicher fixiert, es ist zwischen Magnetleiste 8 und Klemmleiste 35 geklemmt, wobei die Klemmleiste 35 auch gegen die Kanten 23, 24 den Niederhalterleisten 20, 21 geklemmt ist. Die Darstellung gemäß Fig. 18 entspricht der Darstellung gemäß Fig. 9, zeigt also die Situation nach dem Schnitt und vor dem Heranfahren der Zugvorrichtung 4 zum Erfassen der Bandkante 31.

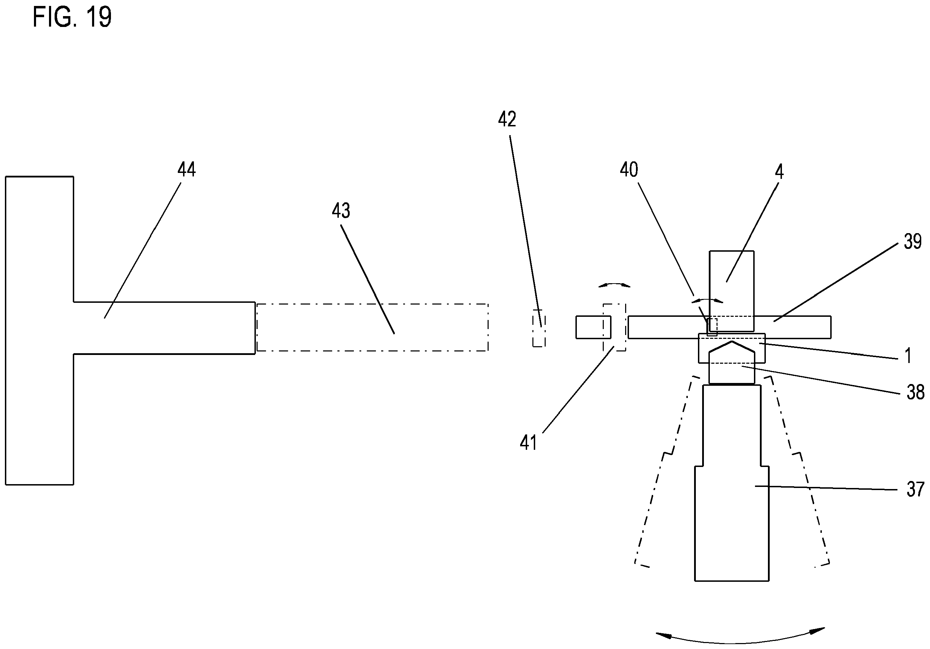

Die Figuren 19 - 22 zeigen verschiedene Layouts für Gesamtanlagen. Gleiche Anlagenkomponenten sind auch hier mit gleichen Bezugszeichen versehen. Die Ausführungen zu den Funktionen der einzelnen Anlagenkomponenten gelten, wenngleich detailliert nur zu einer Figur gegeben, auch für alle anderen in den Figuren beschriebenen Layoutbeispiele.

Fig. 19 zeigt ein beispielhaftes Layout für eine Karkassenanlage ohne Slitter.

Vorgesehen ist eine Abwickelstation 37, aus der das zu bearbeitende Cordband bezogen wird. In der Abwickelstation 37 werden in ein geeignetes Gestell die zu verarbeitenden Materialrollen eingehängt und ausgewickelt. Hierbei wird die zu verarbeitende gummierte Cordbahn von einer Zwischenlage (Folie, Leinen oder Ähnliches) getrennt. Diese Zwischenlage wird verwendet, um das Verkleben der gummierten Materialbahn zu verhindern. Um verschiedene Schneidwinkel zu realisieren, kann wie ausgeführt der Abwickler 37 geschwenkt werden, was jedoch nicht zwingend erforderlich ist. Es gibt unterschiedliche Ausführungsformen hinsichtlich eines solchen Abwicklers. Bekannt sind Einfachabwickler, in die eine Materialrolle eingehängt werden kann. Bei einem Doppelabwickler mit Drehtisch sind zwei Materialrollen zum Einhängen, eine davon wird verarbeitet, eine davon gewechselt. Daneben ist ein Doppelabwickler mit Shuttlerrahmen zum Einhängen von zwei Materialrollen bekannt, eine wird verarbeitet, eine davon gewechselt. Weiterhin sind Kassettenabwickler bekannt, in denen eine Materialrolle in eine Kassette gehängt wird und die Kassette sodann in den Abwickler transportiert wird. Diese Aufzählung ist nicht abschließend. Der Abwickler ist verschwenkbar.

Der Abwickelstation 37 folgt eine erfindungsgemäße Schneidvorrichtung 1, die zum Schneiden des von der Abwickelstation kommenden Cordbands dient. Die Schneidvorrichtung dient zum Abschneiden von Cordbandstreifen in einer definierten Breite und einem definierten Winkel.

Der Scherentisch dient als Materialunterstützung 38 und ist mit der Abwickelstation 37 verbunden und schwenkt im Bedarfsfall gemeinsam mit dieser. Das zu verarbeitende Material liegt auf dem Scherentisch und wird auf diesem liegend in die Schneidvorrichtung 1 gezogen. Am Anfang des Tisches oder darüber befindet sich sehr häufig eine Fördereinrichtung, die den Materialanfang in die Schere transportiert, z. B. eine angetriebene Förderrolle. Dies ist immer dann notwendig, wenn die Maschine komplett entleert ist und der Anfang einer neuen Materialrolle in die Schneidvorrichtung 1 eingelegt werden muss, oder falls zum Schwenken des Abwicklers das Material ein Stück weit aus der Schneidvorrichtung 1 zurückgezogen wurde.

Relevant für die Schneidvorrichtungsbauform ist der Ablauf nach dem Schneiden. Um das geschnittene Material mit wenigen Bearbeitungsschritten in den Folgeprozess einzubinden sind weitere Maschinenkomponenten im Einsatz (Bänder, Hochhalter, Spleißer, etc.). Dafür ist es erforderlich so nah wie möglich mit diesen Komponenten an das Untermesser und in das Maschinengestell zu bauen. Das Material sollte hierzu so wenig wie möglich bewegt werden (u.a. Fallhöhe), um es in geschnittener Ablageposition weiter zu verarbeiten.

Um das Material durch die Schneidvorrichtung 1 zu fördern kommt die Zugvorrichtung 4 zum Einsatz.

Die Zugvorrichtung 4 als Teil der Schneidvorrichtung 1 dient zum Fördern der Materialbahn in die Schneidvorrichtung 1 bzw. zieht das gegriffene Band durch die beiden Messer 2, 3, wie zuvor beschrieben. Die Schneidvorrichtung 1 weist ferner ein Transportband auf, das den geschnittenen Cordbandstreifen aufnimmt und ihn aus der Schneidvorrichtung 1 transportiert. Ein solcher Förderer kann als einzelner Bandgurt, in Form mehrerer Bandgurte oder in Form mehrerer Bandgurte mit einer zwischengeschalteten Hochhebeeinrichtung ausgeführt sein.

Der Cordbandstreifen wird sodann auf die erste Fördereinrichtung in Form eines Bandes 39 einer Spleißvorrichtung, hier einem Überlappspleißer 40 gegeben, und der eigentlichen Spleißeinheit zugeführt. Diese erste Fördereinrichtung 39 kann grundsätzlich auch mit der Fördereinrichtung, die der Schneidvorrichtung 1 zugeordnet ist, zusammenfallen. D. h., dass sich zwischen dem eigentlichen Überlappspleißer 40 und der Schneidvorrichtung 1 nur eine, bezogen auf den Überlappspleißer dann erste Fördereinrichtung befindet. Der Überlappspleißer 40 dient zum Verbinden (rein mechanisch, ohne Zuhilfenahme von Zusatzstoffen) der zuvor geschnittenen Bandstreifen. Sie ist im Winkel verschwenkbar, um das Bandmaterial in verschiedenen Winkeln verarbeiten zu können.

Optional ist noch eine weitere Spleißvorrichtung Form eines Stumpfspleißers 41 gezeigt, der anstelle des Überlappspleißers 40 verwendet werden kann, wenn diese Spleißart erforderlich ist.

Dem Überlappspleißer 40 respektive seiner zweiten Fördereinrichtung (bzw. der alternativen Stumpfspleißvorrichtung 41) nachgeschaltet ist eine optional vorzusehende Beruhigungsrolle 42. Hierbei handelt es sich lediglich um eine angetriebene Rolle, die das Material, das von der Spleißvorrichtung 40/41 kommt, in die nächste Komponente transportiert. Hierbei erfährt das Material durch den Transport über die Rolle eine Gegenbiegung, durch die Gegenbiegung zieht sich das Material in Längsrichtung zusammen. Hintergrund ist somit die Dehnung des Materials in Längsrichtung bei der Verarbeitung in der erfindungsgemäßen Spleißvorrichtung 40/41 zu reduzieren. Diese Rolle ist jedoch nicht zwingend vorzusehen. Während des Abtransports wird in der Schere 38 bereits der nächste Bandstreifen geschnitten.

Gemäß Fig. 19 folgt sodann eine ebenfalls optionale Belegevorrichtung 43. In dieser Station werden auf die erzeugte Materialbahn noch weitere Gummistreifen, ein bis zwölf Stück, aufgelegt. Das Auflegen kann von oben und/oder von unten erfolgen. Des Weiteren werden häufig die Außenkanten der Materialbahn eingefasst, d. h. ein Gummistreifen wird von der Außenkante mit Überstand aufgelegt und um die Gummikante herumgelegt, um die an der Außenkante (= Schnittkante) freiliegenden Cordfäden zu ummanteln.

In jedem Fall vorgesehen ist eine Aufwickelstation 44. In dieser Station werden die erfolgten Materialbahnen wieder mit einer Zwischenlage, die das Verkleben verhindert, auf Spulen gewickelt. Auch hier gibt es verschiedene Ausführungsformen, die von recht einfachen Einfachaufwicklern, in denen das Material manuell abgeschnitten und an einer neuen Rolle aufgewickelt werden muss, bis hin zu vollautomatischen Aufwicklern, in denen für das Materialhandling keinerlei Bedieneingriffe notwendig sind, reichen.

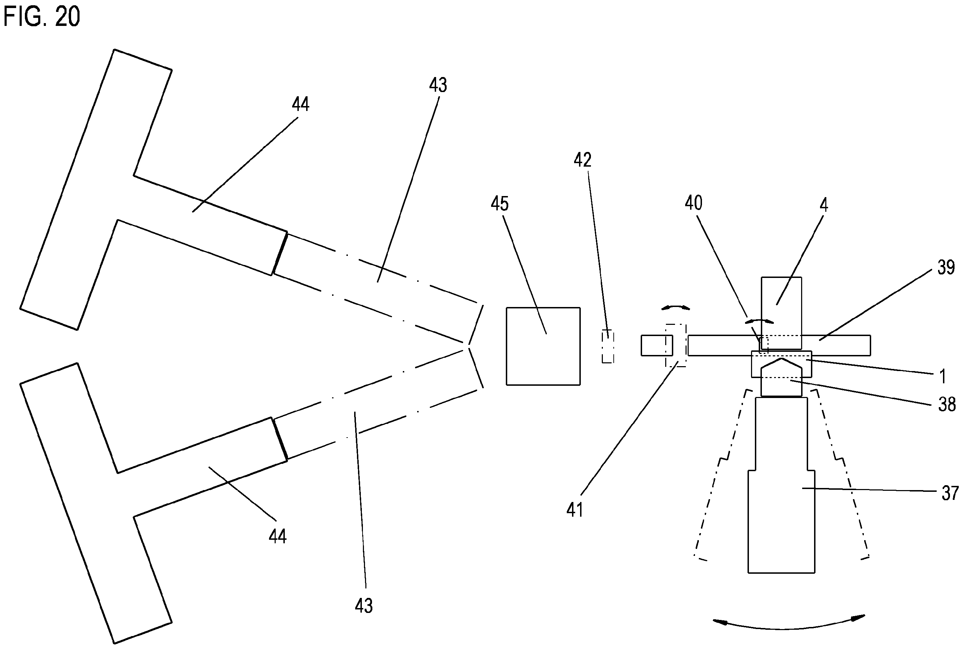

Fig. 20 zeigt ein zweites Layout einer Karkassenanlage, das dem aus Fig. 19 entspricht, das aber im Unterschied zu Fig. 19 einen erfindungsgemäßen Slitter 45 aufweist.

Neben der Abwickelstation 37, Schneideinrichtung 1, Zugvorrichtung 4, Transportband 39 und Spleißvorrichtung 40/41 sowie der optionalen Beruhigungsrolle 43 ist hier ein Slitter 45 vorgesehen. Hierbei handelt es sich um eine Längsteilvorrichtung, d. h., die in der Spleißvorrichtung 40/41 erzeugte lange Materialbahn wird in zwei Streifen getrennt. Dies dient der Erhöhung der Ausbringung einer Maschine, da bei einer solchen Ausgestaltung ein Scherenschnitt zu zwei fertigen Streifen in den beiden hier vorgesehenen Aufwickelstationen 44 führt. Als Slittermesser finden unter anderem Rundmesser Verwendung.

Dem Slitter 45 sind, optional, zwei Belegevorrichtungen 43 nachgeschaltet, in jedem Fall aber zwei Aufwickelstationen 44.

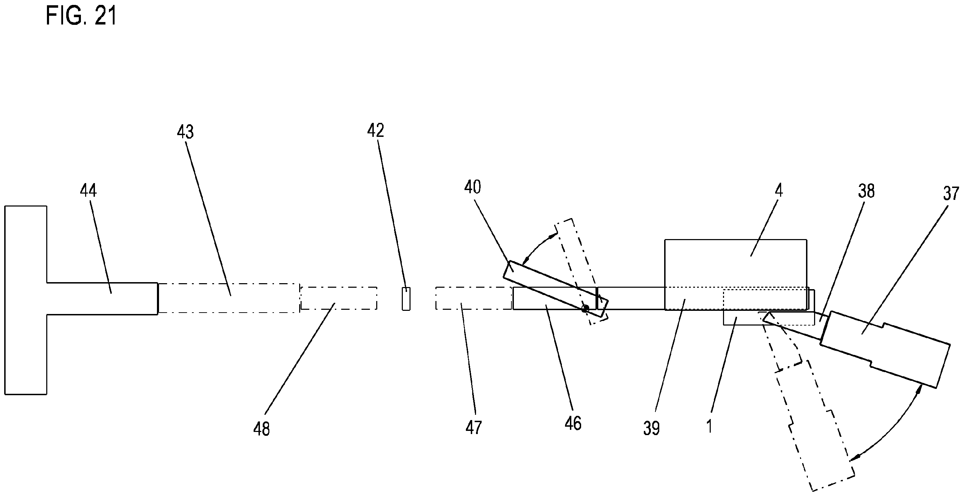

Die Fig. 21 zeigt ein beispielhaftes Layout einer Gürtelanlage ohne Slitter. Komponenten, wie sie bereits in den Layouts der Fig. 19 und 20 beschrieben wurden, sind, sofern vorgesehen, mit gleichen Bezugszeichen versehen, ihre Funktion ist die gleiche wie zu den Fig. 19 und 20 beschrieben.

Vorgesehen ist eine Abwickelstation 37, die hier jedoch um einen deutlich größeren Winkel verschwenkbar ist. Der Abwickler kann beliebigen Typs sein, wie bereits zuvor beschrieben.

Der Abwickelstation 37 folgt die erfindungsgemäße Schneidvorrichtung 1. Der Scherentisch dient als Materialunterstützung 38 und ist mit der Abwickelstation 37 verbunden und schwenkt im Bedarfsfall gemeinsam ihr.

Die Schneidvorrichtung 1 umfasst eine Zugvorrichtung 4, wie zuvor beschrieben wurde.

Der Cordbandstreifen wird sodann auf die erste Fördereinrichtung 39 einer Spleißvorrichtung 40, die als Überlapp- oder Stumpfspleißer ausgeführt sein kann, gegeben, und der eigentlichen Spleißvorrichtung zugeführt. Die Spleißvorrichtung ist um einen beachtlichen Winkel zur Einstellung des erforderlichen Spleißwinkels verschwenkbar. Sie weist ferner ein Abtransportband 46 auf, mit dem das gespleißte Band der nachgeschalteten Komponente zugeführt wird.

Optional kann der Spleißvorrichtung 40 noch ein Band 47 zum Handspleißen, also zur manuellen Verbindung der Bandabschnitte nachgeschaltet sein. Während dieser manuellen Bearbeitung ist die automatische Spleißvorrichtung 40 außer Betrieb. Ein solches Handspleißen ist bei bestimmten Cordbandmaterialien, sehr schmalen Abschnittsbreiten oder auf Kundenwunsch erforderlich.

Optional kann auch hier eine Beruhigungsrolle 42 vorgesehen werden. Weiterhin ist, ebenso optional, ein Reparaturband 48 vorgesehen. Sollten Fehler im Band erkannt werden, können sie hier repariert werden.

Gemäß Fig. 21 folgt sodann eine ebenfalls optionale Belegevorrichtung 43, wie bereits zuvor beschrieben.

In jedem Fall vorgesehen ist eine Aufwickelstation 44, die wie beschrieben unterschiedlich ausgeführt sein kann. In dieser Station werden die erfolgten Materialbahnen wieder mit einer Zwischenlage, die das Verkleben verhindert, auf Spulen gewickelt.

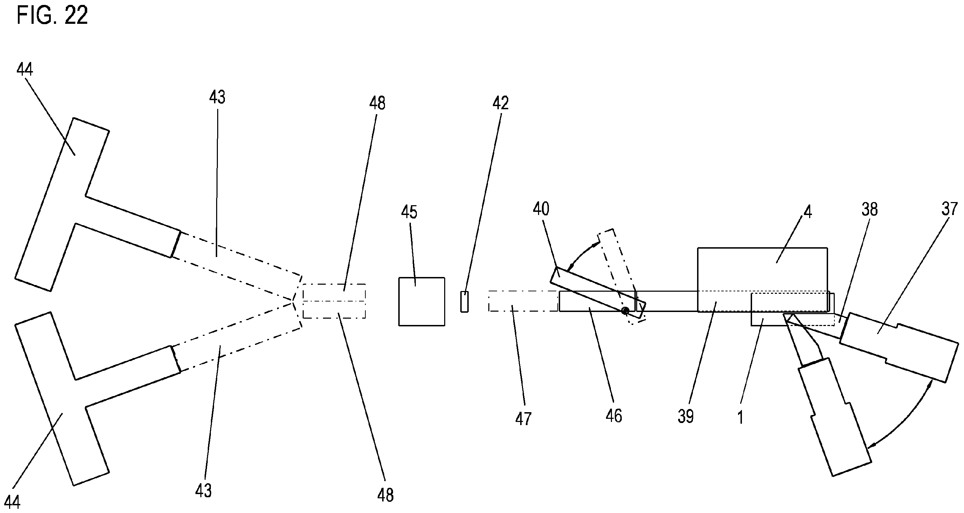

Fig. 22 zeigt schließlich ein Anlagenlayout für eine Gürtelanlage entsprechend Fig. 21, jedoch ist hier zusätzlich ein Slitter 1 integriert. Die hierüber erfolgte Trennung der gespleißten Materialbahn führt dazu, dass in jedem Fall zwei Aufwickelstationen 44 vorzusehen sind, denen jeweils optional jeweils eine Belegevorrichtung 43 und/oder ein Reparaturband 48 vorgeschaltet sein kann.

Wenngleich in sämtlichen Darstellungen das Band von rechts nach links gefördert wird ist es selbstverständlich möglich, das Layout auch in umgekehrter, spiegelbildlicher Ausführung auszulegen, also den Streifen von links nach rechts zu transportieren. Alle als optional beschriebenen Komponenten können in unterschiedlicher Kombination zusammen mit den wesentlichen Komponenten vorgesehen werden. Deshalb sind unterschiedliche Layouts aus allen beschriebenen Komponenten erstellbar.

## Patentansprüche

1. Schneidvorrichtung zum Schneiden eines dünnen und klebrigen Bandes, insbesondere eines Cordbandes, umfassend ein Obermesser und ein Untermesser, eine Zugvorrichtung zum Hindurchziehen eines zu schneidenden Bandabschnitts, sowie einen oberseitig auf das Band aufsetzbaren Niederhalter umfassend eine Magnetleiste zum Fixieren des Bandes, welche Magnetleiste entweder direkt mit im Band enthaltenen Metallelementen oder mit einer unterhalb des Bandes angeordneten und das Untermesser übergreifenden, vertikal bewegbaren Klemmleiste derart zusammenwirkt, dass das Band mit seiner vorlaufenden Kante zum Erfassen mit einem Greifabschnitt der Zugvorrichtung anhebbar ist, wobei die Magnetleiste in der das Band niederhaltenden Stellung das Band von oben direkt auf das Untermesser oder die Klemmleiste drückt, **dadurch gekennzeichnet, dass** am Niederhalter (7) eine in Richtung der Zugvorrichtung (4) der Magnetleiste (8) vorgeschaltete Niederhalteleiste (20) vorgesehen ist, relativ zu welcher die Magnetleiste (8) vertikal bewegbar ist, wobei die vertikal zur Bandebene stehende Niederhalteleiste (20) beim Absenken des Niederhalters (7) auf das Band (6) vorläuft und mit ihrer Unterkante (23) das Band (6) niederdrückt, wonach erst die Magnetleiste (8) auf das Band (6) bewegt wird.

2. Schneidvorrichtung nach Anspruch 1, **dadurch gekennzeichnet, dass** auch an der anderen Seite der Magnetleiste (8) eine zweite Niederhalteleiste (21) vorgesehen ist, die ebenfalls vorläuft und gemeinsam mit der ersten Niederhalteleiste (20) am Band (6)angreift.

3. Schneidvorrichtung nach Anspruch 1 oder 2, **dadurch gekennzeichnet, dass** die Niederhalteleiste (20), und gegebenenfalls auch die zweite Niederhalteleiste (21), über die gesamte Bandbreite aufliegt, oder am Band (6) nur abschnittsweise aufliegt.

4. Schneidvorrichtung nach einem der vorangehenden Ansprüche, **dadurch gekennzeichnet, dass** der Niederhalter (7) über eine Antriebseinrichtung (9) umfassend ein Antriebselement (15) vertikal aus einer Ruhestellung in eine Arbeitsstellung, in der die Niederhalteleiste (20), gegebenenfalls beide Niederhalteleisten (20, 21), an dem Band (6) aufliegen, bewegbar ist.

5. Schneidvorrichtung nach Anspruch 4, **dadurch gekennzeichnet, dass** die Antriebseinrichtung (9) einen Riemen- oder Kettentrieb (10) umfasst, mit wenigstens einem Riemen (11) oder einer Kette, der oder die über Rollen (12, 13) läuft, sowie mit wenigstens einem Antriebselement (14) zum Antreiben einer Rolle (12), wobei der über Linearführungen (17) vertikal bewegbar gelagerte Niederhalter (7) mit dem Riemen (10) oder der Kette gekoppelt ist.

6. Schneidvorrichtung nach Anspruch 5, **dadurch gekennzeichnet, dass** zwei Riemen- oder Kettentriebe (10) vorgesehen sind, die beidseits des Niederhalters (7) angeordnet sind, wobei zwei Rollen (12) der Riementriebe (10) über eine Welle (16), insbesondere eine Torsionswelle miteinander verbunden sind, wobei nur eine der verbundenen Rollen (12) über das Antriebselement (14) antreibbar ist.

7. Schneidvorrichtung nach Anspruch 4, **dadurch gekennzeichnet, dass** die Antriebseinrichtung (9) wenigstens einen Gewindespindeltrieb umfasst, mit einer über ein Antriebselement antreibbaren Gewindespindel und einer auf dieser vertikal laufenden Mutter, wobei der über Linearführungen vertikal bewegbar gelagerte Niederhalter mit der Mutter gekoppelt ist.

8. Schneidvorrichtung nach Anspruch 7, **dadurch gekennzeichnet, dass** zwei Gewindespindeltriebe vorgesehen sind, die beidseits des Niederhalters (7) angeordnet sind, wobei jede Gewindespindel über ein separates Antriebselement antreibbar ist, und wobei beide Antriebselemente synchronisiert sind.

9. Schneidvorrichtung nach einem der Ansprüche 5 bis 8, **dadurch gekennzeichnet, dass** das oder jedes Antriebselement (14) ein Servomotor (15) ist.

10. Schneidvorrichtung nach einem der vorangehenden Ansprüche, **dadurch gekennzeichnet, dass** Erfassungsmittel zum Erfassen der Auflage der Niederhalteleiste (20), gegebenenfalls der beiden Niederhalteleisten (20, 21), auf dem Band (6) vorgesehen sind.

11. Schneidvorrichtung nach Anspruch 9 und 10, **dadurch gekennzeichnet, dass** als Erfassungsmittel der oder jeder Servomotor (15) dient, wobei die Position der Niederhalteleiste (20, 21) aus der Stromaufnahme des oder der Servomotoren (15) abgeleitet wird.

12. Schneidvorrichtung nach Anspruch 10, **dadurch gekennzeichnet, dass** am Niederhalter (7), vorzugsweise an der Niederhalteleiste (20, 21) wenigstens ein Sensor vorgesehen ist, mit dem die Auflage am Band (6) erfassbar ist.

13. Schneidvorrichtung nach einem der vorangehenden Ansprüche, **dadurch gekennzeichnet, dass** die Antriebseinrichtung (9) derart ausgebildet ist, dass der Niederhalter (7) nach erfolgtem Anheben zum Anheben der Kante (31) und Heranfahren des Greifabschnitt (5) der Zugvorrichtung (4) wieder absenkbar ist, um die Kante auf einen Klemmarm (32) des Greifabschnitts (5) aufzulegen.

14. Schneidvorrichtung nach einem der vorangehenden Ansprüche, **dadurch gekennzeichnet, dass** die Magnetleiste (8) aus mehreren nebeneinander angeordneten Blockmagneten (26) besteht, so dass sich eine durchgehende Magneteinheit ergibt.

15. Schneidvorrichtung nach Anspruch 14, **dadurch gekennzeichnet, dass** die Blockmagnete (26) in einem Gehäuse, insbesondere einer Blechummantelung (27), aufgenommen sind.

16. Schneidvorrichtung nach einem der vorangehenden Ansprüche, **dadurch gekennzeichnet dass** die Magnetleiste (8) mit mehreren Stellzylindern (19) verbunden ist, die an einem Niederhalterbalken angeordnet sind.

## Claims

1. Cutting device for cutting a thin and adhesive belt, in particular a cord belt, comprising an upper knife and a lower knife, a pulling device for pulling through a section of belt to be cut, and a hold-down that can be placed on an upper side of the belt, comprising a magnetic strip for fixing the belt, which magnetic strip interacts either directly with metal elements contained in the belt or a vertically movable clamping strip arranged below the belt and reaching over the lower knife, in such a way that the belt can be raised by its leading edge to be gripped by a gripping section of the pulling device, the magnetic strip pressing the belt directly from above onto the lower knife or the clamping strip when in the position holding the belt down, **characterized in that** a hold-down strip (20) located upstream of the magnetic strip (8) in the direction of the pulling device (4) is provided on the hold-down (7), relative to which strip (20) the magnetic strip (8) can be moved vertically, wherein the hold-down strip (20) standing vertically with respect to the belt plane runs forward onto the belt (6) as the hold-down (7) is lowered and presses the belt (6) down with its lower edge (23), after which the magnetic strip (8) is moved onto the belt (6).

2. Cutting device according to Claim 1, **characterized in that** a second hold-down strip (21) is also provided on the other side of the magnetic strip (8), which likewise runs forward and acts on the belt (6) together with the first hold-down strip (20) .

3. Cutting device according to Claim 1 or 2, **characterized in that** the hold-down strip (20) and, if appropriate, also the second hold-down strip (21) rest/s over the entire belt width or rests on the belt (6) only in some sections.

4. Cutting device according to one of the preceding claims, **characterized in that** the hold-down (7) can be moved, by a drive apparatus (9) comprising a drive element (15), vertically from a rest position to a working position, in which the hold-down strip (20), if appropriate both hold-down strips (20, 21), rest/s on the belt (6).

5. Cutting device according to Claim 4, **characterized in that** the drive apparatus (9) comprises a belt or chain drive (10), having at least one belt (11) or a chain, which runs or run over rollers (12, 13), and having at least one drive element (14) for driving a roller (12), wherein the hold-down (7), mounted such that it can be moved vertically over linear guides (17), is coupled to the belt (10) or the chain.

6. Cutting device according to Claim 5, **characterized in that** two belt or chain drives (10) are provided, which are arranged on both sides of the hold-down (7), wherein two rollers (12) of the belt drives (10) are connected to each other via a shaft (16), in particular a torsion shaft, wherein only one of the connected rollers (12) can be driven via the drive element (14).

7. Cutting device according to Claim 4, **characterized in that** the drive apparatus (9) comprises at least one threaded spindle drive having a threaded spindle that can be driven via a drive element and a nut running vertically on the said spindle, wherein the hold-down, mounted such that it can be moved vertically over linear guides, is coupled to the nut.

8. Cutting device according to Claim 7, **characterized in that** two threaded spindle drives are provided, which are arranged on both sides of the hold-down (7), wherein each threaded spindle can be driven via a separate drive element, and wherein the two drive elements are synchronized.

9. Cutting device according to one of Claims 5 to 8, **characterized in that** the or each drive element (14) is a servomotor (15).

10. Cutting device according to one of the preceding claims, **characterized in that** detection means are provided for detecting the contact of the hold-down strip (20), if appropriate of the two hold-down strips (20, 21), on the belt (6).

11. Cutting device according to Claim 9 and 10, **characterized in that** the or each servomotor (15) is used as detection means, wherein the position of the hold-down strip (20, 21) is derived from the current consumption of the servomotor or servomotors (15).

12. Cutting device according to Claim 10, **characterized in that** at least one sensor, with which the contact on the belt (6) can be detected, is provided on the hold-down (7), preferably on the hold-down strip (20, 21).

13. Cutting device according to one of the preceding claims, **characterized in that** the drive apparatus (9) is formed in such a way that, after having been lifted in order to lift the edge (31) and after the gripping section (5) of the pulling device (4) has been moved up, the hold-down (7) can be lowered again in order to lay the edge on a clamping arm (32) of the gripping section (5).

14. Cutting device according to one of the preceding claims, **characterized in that** the magnetic strip (8) comprises a plurality of block magnets (26) arranged beside one another, so that the result is a continuous magnetic unit.

15. Cutting device according to Claim 14, **characterized in that** the block magnets (26) are accommodated in a housing, in particular a sheet-metal jacket (27).

16. Cutting device according to one of the preceding claims, **characterized in that** the magnetic strip (8) is connected to a plurality of actuating cylinders (19), which are arranged on a hold-down beam.

## Revendications

1. Dispositif de coupe pour couper une bande fine et collante, en particulier une bande de corde, comprenant un couteau supérieur et un couteau inférieur, un dispositif de traction pour tirer une portion de bande à couper, ainsi qu'un dispositif de maintien vers le bas pouvant être placé du côté supérieur sur la bande, comprenant une baguette magnétique pour fixer la bande, ladite baguette magnétique coopérant soit directement avec des éléments métalliques contenus dans la bande soit avec une baguette de serrage disposée en dessous de la bande et venant en prise par le dessus avec le couteau inférieur, pouvant être déplacée verticalement, de telle sorte que la bande puisse être soulevée avec son arête avant de manière à être saisie avec une portion de préhension du dispositif de traction, la baguette magnétique pressant la bande par le dessus directement sur le couteau inférieur ou sur la baguette de serrage dans la position maintenant la bande vers le bas, **caractérisé en ce qu'**au niveau du dispositif de maintien vers le bas (7), une baguette de maintien (20) montée avant la baguette magnétique (8) dans la direction du dispositif de traction (4) est prévue, par rapport à laquelle la baguette magnétique (8) peut être déplacée verticalement, la baguette de maintien vers le bas (20) disposée verticalement par rapport au plan de la bande lors de l'abaissement du dispositif de maintien vers le bas (7) avançant en premier sur la bande (6) et pressant la bande (6) vers le bas avec son arête inférieure (23), après quoi seulement la baguette magnétique (8) est déplacée sur la bande (6).

2. Dispositif de coupe selon la revendication 1, **caractérisé en ce qu'**une deuxième baguette de maintien vers le bas (21) est également prévue de l'autre côté de la baguette magnétique (8), laquelle avance également en premier et vient en prise conjointement avec la première baguette de maintien vers le bas (20) avec la bande (6).

3. Dispositif de coupe selon la revendication 1 ou 2, **caractérisé en ce que** la baguette de maintien vers le bas (20), et éventuellement également la deuxième baguette de maintien vers le bas (21), reposent sur toute la largeur de la bande, ou reposent seulement en partie sur la bande (6).

4. Dispositif de coupe selon l'une quelconque des revendications précédentes, **caractérisé en ce que** le dispositif de maintien vers le bas (7) peut être déplacé verticalement par le biais d'un dispositif d'entraînement (9) comprenant un élément d'entraînement (15) depuis une position de repos dans une position de travail dans laquelle la baguette de maintien vers le bas (20), éventuellement les deux baguettes de maintien vers le bas (20, 21), reposent sur la bande (6).

5. Dispositif de coupe selon la revendication 4, **caractérisé en ce que** le dispositif d'entraînement (9) comprend un entraînement à courroie ou à chaîne (10), avec au moins une courroie (11) ou une chaîne, qui passe sur des rouleaux (12, 13), et avec au moins un élément d'entraînement (14) pour entraîner un rouleau (12), le dispositif de maintien vers le bas (7) supporté de manière déplaçable verticalement par le biais de guides linéaires (17) étant accouplé à la courroie (10) ou à la chaîne.

6. Dispositif de coupe selon la revendication 5, **caractérisé en ce que** deux entraînements à courroie ou à chaîne (10) sont prévus, lesquels sont disposés des deux côtés du dispositif de maintien vers le bas (7), deux rouleaux (12) des entraînements à courroie (10) étant connectés l'un à l'autre par le biais d'un arbre (16), en particulier d'un arbre de torsion, seulement l'un des rouleaux connectés (12) pouvant être entraîné par le biais de l'élément d'entraînement (14).

7. Dispositif de coupe selon la revendication 4, **caractérisé en ce que** le dispositif d'entraînement (9) comprend au moins un entraînement à broche filetée avec une broche filetée pouvant être entraînée par le biais d'un élément d'entraînement et un écrou se déplaçant verticalement sur celle-ci, le dispositif de maintien vers le bas supporté de manière déplaçable verticalement par le biais de guides linéaires étant accouplé à l'écrou.

8. Dispositif de coupe selon la revendication 7, **caractérisé en ce que** deux entraînements à broche filetée sont prévus, lesquels sont disposés des deux côtés du dispositif de maintien vers le bas (7), chaque broche filetée pouvant être entraînée par le biais d'un élément d'entraînement séparé, et les deux éléments d'entraînement étant synchronisés.

9. Dispositif de coupe selon l'une quelconque des revendications 5 à 8, **caractérisé en ce que** le ou chaque élément d'entraînement (14) est un servomoteur (15).

10. Dispositif de coupe selon l'une quelconque des revendications précédentes, **caractérisé en ce qu'**il est prévu des moyens de détection pour détecter l'application de la baguette de maintien vers le bas (20), éventuellement des deux baguettes de maintien vers le bas (20, 21) sur la bande (6).

11. Dispositif de coupe selon les revendications 9 et 10, **caractérisé en ce que** l'on utilise en tant que moyen de détection le ou chaque servomoteur (15), la position de la baguette de maintien vers le bas (20, 21) étant déduite de la consommation de courant du ou des servomoteurs (15).

12. Dispositif de coupe selon la revendication 10, **caractérisé en ce qu'**au moins un capteur est prévu sur le dispositif de maintien vers le bas (7), de préférence sur la baguette de maintien vers le bas (20, 21), avec lequel l'application sur la bande (6) peut être détectée.

13. Dispositif de coupe selon l'une quelconque des revendications précédentes, **caractérisé en ce que** le dispositif d'entraînement (9) est réalisé de telle sorte que le dispositif de maintien vers le bas (7), après réalisation du soulèvement pour soulever l'arête (31), et rapprochement de la portion de préhension (5) du dispositif de traction (4), peut être à nouveau abaissé afin de placer l'arête sur un bras de serrage (32) de la portion de préhension (5).

14. Dispositif de coupe selon l'une quelconque des revendications précédentes, **caractérisé en ce que** la baguette magnétique (8) se compose de plusieurs blocs d'aimants (26) disposés les uns à côté des autres de telle sorte que l'on obtienne une unité magnétique continue.

15. Dispositif de coupe selon la revendication 14, **caractérisé en ce que** les blocs d'aimants (26) sont reçus dans un boîtier, en particulier une enveloppe en tôle (27).

16. Dispositif de coupe selon l'une quelconque des revendications précédentes, **caractérisé en ce que** la baguette magnétique (8) est connectée à plusieurs cylindres de réglage (19) qui sont disposés sur une poutre de maintien vers le bas.
